# EUROPÄISCHE PATENTSCHRIFT

(11) **EP 3 785 954 B1**
(45) Veröffentlichungstag und Bekanntmachung des Hinweises auf die Patenterteilung: **24.08.2022**
(21) Anmeldenummer: 19193774.7
(22) Anmeldetag: 27.08.2019
(51) Int. Cl.: B60J 1/20

(54) **VERBLENDUNGSANORDNUNG ZUR VERBLENDUNG EINER FAHRZEUGFRONTSCHEIBE**
VENEER ASSEMBLY FOR APPLYING A VENEER TO A VEHICLE FRONT PANEL
DISPOSITIF DE REVÊTEMENT DESTINÉ AU REVÊTEMENT D'UNE VITRE AVANT DE VÉHICULE

(43) Veröffentlichungstag der Anmeldung: 03.03.2021
(73) Patentinhaber: REMIS Gesellschaft für Entwicklung und Vertrieb von technischen Elementen mbH Köln, 50829 Köln (DE)
(72) Erfinder: Bornholdt, Alexander, 53721 Siegburg (DE); Borowski, Thomas, 50374 Erftstadt (DE)
(74) Vertreter: terpatent Patentanwälte ter Smitten Eberlein-Van Hoof Rütten Daubert

(56) Entgegenhaltungen:
- AU-A1- 2002 301 996
- DE-U1- 20 306 085
- FR-A1- 2 765 157
- US-A- 4 923 238

## Beschreibung

Die Erfindung betrifft eine Verblendungsanordnung zur Verblendung einer Fa h rzeugfrontscheibe.

Derartige Verblendungsanordnungen werden bei Kraftfahrzeugen (KFZ), insbesondere bei sogenannten Wohnmobilen, eingesetzt, um zum einen den Fahrzeuginnenraum gegen unerwünschte Einblicke von außen abzuschirmen und zum anderen eine Verdunklung des Innenraums zu ermöglichen.

Typischerweise weisen derartige Verblendungsanordnungen mindestens ein Verblendungssystem mit einem Verblendungskörper auf, der bedarfsweise vor der Frontscheibe aufspannbar ist, um diese zu verblenden. Dokument US 4 923 238 zeigt eine gattungsgemäße Verblendungsanordnung.

Aus der US 5,269,360 A und aus der US 2017/0114591 A1 ist beispielweise eine Verblendungsanordnung mit zwei Verblendungssystemen bekannt, die jeweils einen horizontal aufspannbaren Verblendungskörper aufweisen. Die Verblendungskörper sind an den beiden in Fahrzeugquerrichtung gegenüberliegenden Querseiten der Frontscheibe angeordnet, wobei die Verblendungskörper jeweils an der sogenannten A-Säule des KFZ befestigt sind. Die beiden Verblendungskörper sind jeweils durch eine fest montierte obere Führungsschnur und eine fest montierte untere Führungsschnur in horizontaler Richtung geführt und zur Mitte der Frontscheibe hin aufspannbar, sodass durch die beiden Verblendungskörper in einer aufgespannten Verblendungsstellung die Frontscheibe verblendbar ist. In einer zusammengeklappten Einschubstellung sind die Verblendungskörper jeweils in einer an der A-Säule montierten Aufnahme arretierbar.

Bei modernen KFZ sind im Bereich der A-Säule jedoch häufig Airbag-Systeme verbaut, die durch die offenbarte Verblendungsanordnung behindert werden können. Ferner wird durch die fest montierten Führungsschnüre der offenbarten Verblendungsanordnung der optische Eindruck des KFZ-Innerraums beeinträchtigt.

Aus der DE 203 06 085 U1 ist ferner eine Verblendungsanordnung mit einer Kassette und einem aus der Kassette heraus und In die Kassette hinein bewegbaren aufspannbaren Verblendungskörper bekannt. Die Kassette ist fest auf dem Armaturenbrett des KFZ - also an einem unteren Ende der Frontscheibe - montiert und weist an beiden Querenden jeweils eine schwenkbare Führungsschiene auf. In der Nichtgebrauchsstellung ist der zusammengefaltete Verblendungskörper vollständig in der Kassette aufgenommen und die schwenkbaren Führungsschienen befinden sich jeweils in einer eingeklappten horizontalen Stellung. In der Gebrauchsstellung sind die Führungsschienen in einer ausgeklappten Stellung senkrecht zu der Kassette angeordnet, sodass der Verblendungskörper entlang der Führungsschienen vor der Frontscheibe auf und ab bewegbar ist, um bei Bedarf die Frontscheibe in einer aufgespannten Verblendungsstellung zu verblenden.

Bei modernen KFZ sind im Bereich des Armaturenbretts jedoch häufig Staufächer angeordnet, deren Funktion durch die offenbarte Verblendungsanordnung beeinträchtigt werden kann. Ferner können bei modernen KFZ im Bereich des Armaturenbretts ebenfalls Airbag-Systeme angeordnet sein, die durch die offenbarte Verblendungsanordnung behindert werden können. Darüber hinaus wird durch die auf dem Armaturenbrett angeordnete Kassette bei der Fahrt die Sicht des KFZ-Fahrers auf die Straße beeinträchtigt.

Es stellt sich daher die Aufgabe, eine Verblendungsanordnung zu schaffen, die bei stehendem KFZ eine zuverlässige Verblendung der Fahrzeugfrontscheibe ermöglicht und die bei der Fahrt weder Sicherheitseinrichtungen des KFZ behindert noch das Sichtfeld des KFZ-Fahrers beeinträchtig.

Diese Aufgabe wird durch ein Verblendungsanordnung zur Verblendung einer Fahrzeugfrontscheibe mit den Merkmalen des Hauptanspruchs 1 gelöst.

Die erfindungsgemäße Verblendungsanordnung zur Verblendung einer Fahrzeugfrontscheibe umfasst mindestens ein Verblendungssystem mit einer Kassette und mit einem aufspannbaren Verblendungskörper, der aus der Kassette heraus und in die Kassette hinein bewegbar ist. Der Verblendungskörper ist in einer Einschubstellung platzsparend und unauffällig in der Kassette angeordnet. Vorzugsweise ist der Verblendungskörper in der Einschubstellung vollständig innerhalb der Kassette angeordnet. Bei Bedarf ist der Verblendungskörper aus der Kassette heraus in eine Verblendungsstellung bewegbar, in der der Verblendungskörper vor der Frontscheibe aufgespannt ist, um diese zu verblenden. Typischerweise ist an dem Verblendungskörper eine Griffleiste befestigt, über die der Verblendungskörper zuverlässig aus der Kassette heraus und in die Kassette hinein bewegbar ist.

Erfindungsgemäß umfasst das Verblendungssystem ferner eine horizontale obere Führungsschiene zur Führung des Verblendungskörpers in horizontaler Richtung. Im vorliegenden Kontext sind alle Richtungsangaben auf das KFZ bezogen, in dem die erfindungsgemäße Verblendungsanordnung montierbar ist. Unter einer horizontalen Richtung ist folglich jede Richtung zu verstehen, die parallel zum Untergrund ist, auf dem das KFZ steht. Vorzugsweise erstreckt sich die obere Führungsschiene im Wesentlichen parallel zu der Frontscheibe und im Wesentlichen in einer Fahrzeugquerrichtung. Die obere Führungsschiene ist feststehend - also unbeweglich - oberhalb der Frontscheibe dauerhaft In dem KFZ montierbar. Unter dem Terminus "oberhalb der Frontscheibe" ist hierbei jeder Montageort im Fahrzeuginnenraum zu verstehen, der höher als oder gleich hoch wie ein von dem Fahrzeuginnenraum aus sichtbarer oberer Randbereich der Frontscheibe gelegen ist. Insbesondere kann die obere Führungsschiene an einem KFZ-Dachhimmel oder an einem Dachbereich der KFZ-Karosserie montierbar sein. Es ist auch vorstellbar, dass die obere Führungsschiene unmittelbar am oberen Randbereich der Frontscheibe montierbar ist. Die im Betrieb fest im KFZ montierte obere Führungsschiene ist somit erfindungsgemäß außerhalb des Sichtfelds des Fahrers angeordnet. Vorzugsweise ist die obere Führungsschiene relativ steif und erstreckt sich im Wesentlichen parallel zu der Frontscheibe, um eine stabile und zuverlässige Führung für den Verblendungskörper entlang der Frontscheibe zu schaffen. Die obere Führungsschiene kann beispielsweise aus Kunststoff bestehen, oder kann aus einem beliebigen anderen relativ steifen und leichtgewichtigen Material bestehen.

Erfindungsgemäß ist die Kassette innerhalb einer Kassetten-Schwenkebene, die sich vorzugsweise im Wesentlichen parallel zu der Fahrzeugfrontscheibe erstreckt, zwischen einer horizontalen Nichtgebrauchsstellung, in der die Kassette parallel zu der oberen Führungsschiene angeordnet ist, und einer herabgeschwenkten Gebrauchsstellung, in der die Kassette senkrecht zu der oberen Führungsschiene angeordnet ist, verschwenkbar. In der Nichtgebrauchsstellung ist die Kassette mit dem darin verstauten Verblendungskörper somit oberhalb der Frontscheibe oder zumindest an einem oberen Randbereich der Frontscheibe angeordnet. Bei Bedarf ist die Kassette aus der horizontalen Nichtgebrauchsstellung in die herabgeschwenkte Gebrauchsstellung schwenkbar, in der der Verblendungskörper entlang der oberen Führungsschiene aus der Kassette herausbewegbar und vor der Frontscheibe aufspannbar ist. Typischerweise ist die Kassette derart angeordnet, dass sie in der Gebrauchsstellung an der A-Säule des KFZ positioniert ist und sich im Wesentlichen parallel zu der A-Säule erstreckt. Die Kassette ist vorzugsweise über ein Kassettenhalteelement direkt an einem Dachbereich der KFZ-Karosserie befestigt, wobei das Kassettenhalteelement ein Drehgelenk aufweist, durch das die Kassette schwenkbar mit dem Kassettenhalteelement verbunden ist. Vorzugsweise besteht das Kassettenhalteelement aus einem Metall.

Da die Kassette ohne zusätzliche Vorkehrungen schwerkraftbedingt selbsttätig aus der Nichtgebrauchsstellung in die Gebrauchsstellung schwenken würde, ist erfindungsgemäß eine Kassetten-Arretierungsanordnung vorgesehen, durch die die Kassette in der Nichtgebrauchsstellung zuverlässig arretierbar ist. Hierdurch ist - insbesondere bei der Fahrt - ein unbeabsichtigtes Herabschwenken der Kassette zuverlässig vermeidbar.

Bei der erfindungsgemäßen Verblendungsanordnung ist die Kassette mit dem darin verstauten Verblendungskörper in der Nichtgebrauchsstellung platzsparend außerhalb des Sichtfeldes des Fahrers angeordnet. Ferner sind bei der erfindungsgemäßen Verblendungsanordnung in der Nichtgebrauchsstellung keine Komponenten im Wirkbereich von Airbag-Systemen oder anderen KFZ-Sicherheitseinrichtungen angeordnet. Bei der Fahrt sind durch die erfindungsgemäße Verblendungsanordnung folglich weder Sicherheitseinrichtungen des KFZ behindert noch ist durch die erfindungsgemäße Verblendungsanordnung das Sichtfeld des KFZ-Fahrers beeinträchtig.

Ferner ermöglicht die erfindungsgemäße Verblendungsanordnung in der Gebrauchsstellung ein zuverlässiges Aufspannen des Verblendungskörpers, und ermöglicht somit - bei einem stehenden KFZ - eine zuverlässige Verblendung der Fahrzeugfrontscheibe.

Vorzugsweise sind zwei Verblendungssysteme vorgesehen, die spiegelsymmetrisch zueinander ausgebildet sind und die spiegelsymmetrisch bezogen auf eine vertikale Fahrzeugfrontscheiben-Mittellinie montierbar sind. Die beiden Verblendungssysteme sind typischerweise derart angeordnet, dass die Kassetten der beiden Verblendungssysteme in der herabgeschwenkten Gebrauchsstellung an den beiden A-Säulen des KFZ angeordnet sind. Die Kassetten und die oberen Führungsschienen der beiden Verblendungssysteme sind hierbei derart ausgebildet, dass die Verblendungskörper der beiden Verblendungssysteme zu Frontscheibenmitte hin aufspannbar sind, um die Frontscheibe im Wesentlichen vollständig zu verblenden. Vorzugsweise sind die Griffleisten der beiden aufgespannten Verblendungskörper in der Verblendungsstellung bedarfsweise aneinander befestigbar, beispielsweise über eine Magnetverbindung, um die beiden Verblendungskörper in der Verblendungsstellung zu arretieren. Im Vergleich zu einer Ausführung mit einem einzigen Verblendungssystem muss hierbei durch jeden Verblendungskörper nur eine deutliche kleiner Frontscheibenfläche verblendet werden, sodass die beiden Verblendungskörper deutlich kleiner sein können. Folglich können auch die Kassetten der beiden Verblendungssysteme deutlich kompakter und leichter ausgeführt sein, wodurch sich die Kassetten in der Nichtgebrauchsstellung besonders unauffällig im Dachbereich des KFZ-Innenraums anordnen lassen und auch besonders zuverlässig arretieren lassen.

In einer bevorzugten Ausführung der Erfindung ist der Verblendungskörper ein zusammenfaltbares Plissee. Das Plissee, auch als Faltstore bezeichnet, ist einfach aufgebaut, kompakt in der Kassette verstaubar und zuverlässig vor der Frontscheibe aufspannbar. Vorzugsweise weisen die einzelnen Faltbereiche des Plissees jeweils an einem oberen Randbereich eine Führungsöffnung auf, durch die sich die obere Führungsschiene erstreckt und über die das Plissee zuverlässig entlang der Führungsschiene bewegbar ist. Das Plissee schafft einen kostengünstigen und zuverlässigen Verblendungskörper.

Vorzugsweise ist ein - bezogen auf die Gebrauchsstellung - oberes Ende der Kassette über ein oberes Führungsschienen-Gelenk mit einem Ende der oberen Führungsschiene verbunden. Über das obere Führungsschienen-Gelenk ist die Kassette - unabhängig von der Kassetten-Stellung - dauerhaft mit der oberen Führungsschiene verbunden, wobei das obere Führungsschienen-Gelenk zumindest in der Gebrauchsstellung eine Führung für den Verblendungskörper im Übergangsbereich zwischen der Kassette und der oberen Führungsschiene bildet. Hierdurch ist sichergestellt, dass der Verblendungskörper beim Herausbewegen aus der Kassette stets zuverlässig durch die obere Führungsschiene geführt ist, ohne dass hierfür eine manuelle Ausrichtung des Verblendungskörpers bezogen auf die obere Führungsschiene erforderlich ist.

Vorzugsweise ist eine untere Führungsschiene zur Führung des Verblendungskörpers in horizontaler Richtung vorgesehen, wobei ein Ende der unteren Führungsschiene über ein unteres Führungsschienen-Gelenk mit einem dem oberen Ende der Kassette gegenüberliegenden unteren Ende der Kassette verbunden ist, und wobei die untere Führungsschiene in der Nichtgebrauchsstellung parallel zu der Kassette angeordnet ist und in der Gebrauchsstellung senkrecht zu der Kassette angeordnet ist.

Das erfindungsgemäße Verblendungssystem mit den zwei Führungsschienen-Gelenken ist folglich zweistufig ausklappbar/zusammenklappbar. In der Nichtgebrauchsstellung ist die untere Führungsschiene über das untere Führungsschienen-Gelenk an die Kassette angeklappt oder in die Kassette eingeklappt und somit an/in der Kassette verstaut. Die Kassette inklusive der unteren Führungsschiene ist wiederum über das obere Führungsschienen-Gelenk an die obere Führungsschiene angeklappt. Die untere Führungsschiene ist somit in der Nichtgebrauchsstellung platzsparend und insbesondere auch unauffällig in/an der Kassette verstaut. In der Gebrauchsstellung ist untere Führungsschiene ausgeklappt und senkrecht zu der Kassette angeordnet. Die untere Führungsschiene ist folglich in der Gebrauchsstellung parallel zu der oberen Führungsschiene an dem gegenüberliegenden Ende der Kassette angeordnet und schafft eine Führung für die Unterseite des Verblendungskörpers beim Bewegen des Verblendungskörpers aus der Kassette heraus oder in die Kassette hinein.

Dies ermöglicht ein besonders komfortables Aufspannen des Verblendungskörpers. Ferner verhindert die untere Führungsschiene ein "Durchhängen" des aufgespannten Verblendungskörpers bei nicht exakt vertikaler Anordnung des Verblendungskörpers und verhindert darüber hinaus auch ein Schwingen des aufgespannten Verblendungskörpers. Dies schafft eine besonders zuverlässige Verblendungsanordnung, die in der Gebrauchsstellung eine komfortable und zuverlässige Verblendung der Frontscheibe ermöglicht und in der Nichtgebrauchsstellung kompakt und unauffällig verstaubar ist.

In einer bevorzugten Ausführung der Erfindung ist die untere Führungsschiene in der Nichtgebrauchsstellung zuverlässig an der Kassette arretierbar, um - insbesondere bei der Fahrt - ein unbeabsichtigtes Ausklappen der unteren Führungsschiene zu vermeiden.

Vorzugsweise ist eine Führungsschienen-Arretierungsvorrichtung vorgesehen, die an einem unteren Endbereich der Fahrzeugfrontscheibe positionierbar und feststehend montierbar ist, und durch die die untere Führungsschiene in der Gebrauchsstellung arretierbar ist. Die Führungsschienen-Arretierungsvorrichtung ist im montierten Zustand typischerweise dauerhaft auf dem Armaturenbrett des KFZ befestigt und schafft in der Gebrauchsstellung eine zuverlässige und definierte Ausrichtung der unteren Führungsschiene und somit des Verblendungskörpers bezogen auf das KFZ und somit insbesondere auch bezogen auf die Frontscheibe. Dies ermöglicht eine besonders zuverlässige Verblendung der Frontscheibe. Vorzugsweise ist hierbei in der Gebrauchsstellung ein von der Kassette abgewandtes freies Ende der unteren Führungsschiene an der Führungsschienen-Arretierungsvorrichtung befestigt, wodurch die untere Führungsschiene auf einfache Weise und zuverlässig arretiert ist.

Bei der erfindungsgemäßen Ausführung der Verblendungsanordnung mit zwei Verblendungssystemen Ist durch die Führungsschienen-Arretierungsvorrichtung vorzugsweise die untere Führungsschiene beider Verblendungssysteme arretierbar. Für die Arretierung der zwei unteren Führungsschienen muss folglich nur eine einzige Führungsschienen-Arretierungsvorrichtung vorgesehen sein. Besonders bevorzugt ist die Führungsschienen-Arretierungsvorrichtung hierbei derart ausgebildet, dass die Verblendungskörper der beiden Verblendungssysteme in ihrer vollständig aufgespannten Verblendungsstellung im direkten horizontalen Kontakt miteinander stehen, sodass die Frontscheibe durch die beiden Verblendungskörper im Wesentlichen vollständig verblendbar ist.

Da die untere Führungsschiene in der Nichtgebrauchsstellung in/an die Kassette angeklappt ist, ist die Länge der unteren Führungsschiene auf die Höhe der Kassette beschränkt. In einer besonders bevorzugten Ausführung der Erfindung bildet daher in der Gebrauchsstellung die Führungsschienen-Arretierungsvorrichtung zusammen mit der unteren Führungsschiene beider Verblendungssysteme eine untere Verblendungskörperführung zur Führung des Verblendungskörpers in horizontaler Richtung, wobei in der Gebrauchsstellung die horizontale Führungslänge der unteren Verblendungskörperführung mehr als doppelt so groß ist wie die Höhe der senkrecht zu der Verblendungskörperführung angeordneten Kassette. Hierfür kann beispielsweise an der Führungsschienen-Arretierungsvorrichtung ein horizontales Führungselement vorgesehen sein, das in der Gebrauchsstellung horizontal an die unteren Führungsschienen der beiden Verblendungssysteme anschließt und mit diesen die untere Verblendungskörperführung bildet. Auch kann beispielsweise die untere Führungsschiene teleskopierbar ausgebildet sein. Diese Ausführung ermöglicht die vollständige Verblendung einer Frontscheibe, deren Breitenausdehnung mehr als deren doppelte Höhenausdehnung beträgt.

In einer bevorzugten Ausführung der Erfindung ist das obere Führungsschienen-Gelenk und/oder das untere Führungsschienen-Gelenk durch ein elastisch biegsames Federelement gebildet. Vorzugsweise ist das Federelement eine Schraubenfeder. Alternativ kann das Federelement auch ein massiver Körper aus einem relativ elastischen Material sein, beispielweise aus Ethylen-Propylen-Dien-Kautschuk (EPDM), aus einem thermoplastischen Elastomer (TPE) oder aus einem anderen elastischen Kunststoff. Das Federelement schafft ein zuverlässiges und kostengünstiges Führungsschienen-Gelenk mit guten Führungseigenschaften.

Aus Sicherheitsgründen muss sichergestellt sein, dass die Kassette vor Fahrtbeginn zuverlässig in der hochgeklappten Nichtgebrauchsposition arretiert ist. Vorzugsweise weist die Kassetten-Arretierungsanordnung daher einen Arretierungssensor auf, durch den ein Arretierungszustand der Kassette elektronisch erfassbar ist. Besonders bevorzugt ist der Arretierungssensor durch einen kostengünstigen Magnetschalter gebildet. Der Arretierungssensor stellt ein Arretierungssignal bereit, das - beispielsweise durch eine KFZ-Bordelektronik - auslesbar ist. Hierdurch kann beispielweise bei nicht arretierter Kassette ein Starten des Motors verhindert werden. Das Arretierungssignal kann beispielsweise auch auf einfache Weise zur Bereitstellung eines Warnsignals verwendet werden.

In einer bevorzugten Ausführung der Erfindung weist die Kassetten-Arretierungsanordnung einen Arretierungsvorsprung auf, der auf einer der Fahrzeugfrontscheibe zugewandten Rückseite der Kassette angeordnet ist, und weist die Kassetten-Arretierungsanordnung eine Arretierungsaufnahme auf, die oberhalb der Fahrzeugfrontscheibe montierbar ist und in die der Arretierungsvorsprung in der Nichtgebrauchsstellung der Kassette eingreift. Der Arretierungsvorsprung ist hierbei zuverlässig in der Arretierungsaufnahme verriegelbar, beispielsweise durch einen vorgespannten Schieber. Dies schafft eine kostengünstige und zuverlässige Kassetten-Arretierungsanordnung, die unauffällig auf der Rückseite der Kassette angeordnet ist. Die Arretierungsaufnahme ist hierbei vorzugsweise direkt an der Karosserie befestigbar, um eine besonders stabile und zuverlässige Kassetten-Arretierungsanordnung zu schaffen.

Vorzugsweise weist die Kassetten-Arretierungsanordnung ein manuell betätigbares Entriegelungselement auf, durch dessen Betätigung die Arretierung der Kassette in der Nichtgebrauchsstellung lösbar ist. Das Entriegelungselement kann beispielsweise als einfacher Knopf oder Hebel ausgebildet sein. Das Entriegelungselement ist auf einer im montierten Zustand der Fahrzeugfrontscheibe zugewandten Seite der Kassetten-Schwenkebene angeordnet, sodass es insbesondere in der Nichtgebrauchsstellung näherliegend zu der Frontscheibe positioniert ist als die Kassette. Beispielweise kann das Entriegelungselement auf einer Unterseite oder auf einer der Frontscheibe zugewandten Rückseite der Arretierungsaufnahme angeordnet sein. In jedem Fall Ist das Entriegelungselement in der Nichtgebrauchsstellung bezogen auf die Fahrerposition hinter der Kassetten-Schwenkebene positioniert, in der sich die Kassette beim Herabschwenken aus der Nichtgebrauchsstellung bewegt. Hierdurch ist sichergestellt, dass sich beim manuellen Betätigen des Entriegelungselement durch den Fahrer die Handfläche des Fahrers typischerweise unterhalb der Kassette befindet und folglich die herabschwenkende Kassette sicher aufnehmen kann.

In einer bevorzugten Ausführung der Erfindung ist eine Kassetten-Aufnahme vorgesehen, die dauerhaft an einem Fahrzeugarmaturenbrett und/oder an einer Fahrzeug-A-Säule montierbar ist, und die nur in der Gebrauchsstellung temporär das untere Ende der Kassette aufnimmt. Durch die Kassetten-Aufnahme ist die Kassette und somit auch der Verblendungskörper in der Gebrauchsstellung zuverlässig positioniert. Ferner ist durch die Kassetten-Aufnahme in der Gebrauchsstellung ein unkontrolliertes Schwingen der Kassette vermeidbar.

Vorzugsweise ist eine Kassettenblende vorgesehen, die oberhalb der Fahrzeugfrontscheibe montierbar ist, und die die Kassette in der Nichtgebrauchsstellung mindestens teilweise auf einer von der Fahrzeugfrontscheibe abgewandten Vorderseite verdeckt. Vorzugsweise ist die Kassettenblende derart ausgebildet, dass die Kassette durch die Kassettenblende in der Nichtgebrauchsstellung im Wesentlichen vollständig verdeckt ist. Beispielweise kann die Kassettenblende auch eine Klappenvorrichtung aufweisen, die in der Nichtgebrauchsstellung eine Kassetten-Unterseite verdeckt. Form und Farbe der Kassettenblende sind hierbei typischerweise an die Innenausstattung des entsprechenden KFZ angepasst. Auf diese Weise ist die Kassette in der Nichtgebrauchsstellung besonders unauffällig verstaubar, sodass der optische Eindruck des Innenraums durch die erfindungsgemäße Verblendungsanordnung nur minimal beeinträchtigt ist.

Aus Sicherheitsgründen ist die Verblendungsanordnung typischerweise derart montiert, dass die Kassette in der Nichtgebrauchsstellung beabstandet zu der Fahrzeug-A-Säule, in der häufig Airbag-Systeme angeordnet sind, positioniert ist. In einer bevorzugten Ausführung der Erfindung ist ein Kassetten-Schwenkgelenk exzentrisch auf einer im montierten Zustand in der Gebrauchsstellung von einer Fahrzeug-A-Säule abgewandten inneren Kassettenhälfte angeordnet, sodass sich die Kassette beim Herabschwenken aus der Gebrauchsstellung in Richtung der Fahrzeug-A-Säule bewegt. Vorzugsweise liegt die Kassette in der herabgeschwenkten Gebrauchsstellung mindestens teilweise an der Fahrzeug-A-Säule, um eine im Wesentlichen vollständige Verblendung der Frontscheibe zu ermöglichen.

Um die Handhabung der Verblendungsanordnung zu erleichtern, weist das Verblendungssystem im Allgemeinen eine im Wesentlichen plattenförmige Griffleiste auf, die an einem bewegbaren Ende des Verblendungskörpers angeordnet ist und über die der Verblendungskörper aus der Kassette heraus und in die Kassette hinein bewegbar ist. "Plattenförmig" bedeutet in diesem Zusammenhang, dass die Ausdehnung der Griffleiste in einer ersten horizontalen Querrichtung signifikant größer ist als die Ausdehnung der Griffleiste in einer zweiten horizontalen Querrichtung, die senkrecht zu der ersten Querrichtung steht. Eine Vorderseite und eine Rückseite der Griffleiste weisen folglich eine signifikant größere Fläche auf als die beiden lateralen Seiten der Griffleiste.

Erfindungsgemäß ist die Griffleiste zwischen einer Querstellung und einer Parallelstellung verkippbar. In der Querstellung ist die Griffleiste quer zu der Bewegungsrichtung des Verblendungskörpers ausgerichtet, d.h. die Griffleiste ist derart angeordnet, dass die flächenmäßig größere Vorderseite/Rückseite der Griffleiste senkrecht zu der Bewegungsrichtung des Verblendungskörpers steht. In der Parallelstellung ist die Griffleiste parallel zu der Bewegungsrichtung des Verblendungskörpers ausgerichtet, d.h. die Griffleiste ist derart angeordnet, dass die flächenmäßig größere Vorderseite/Rückseite der Griffleiste parallel zu der Bewegungsrichtung des Verblendungskörpers steht. Die verkippbare Griffleiste ist einerseits in der Querstellung relativ kompakt in der Kassette verstaubar. Andererseits ist die verkippbare Griffleiste in der Parallelstellung komfortabel durch relativ schmale Spalte, wie beispielsweise zwischen der Frontscheibe und dem Innenspiegel, bewegbar. Ferner ermöglicht die verkippbare Griffleiste auch ein besonders komfortables Bewegen der Griffleiste, da durch das Verkippen eine Anpassung an unterschiedliche Handstellungen während der Bewegung möglich ist.

Die verkippbare Griffleiste ist hierbei unabhängig von der erfindungsgemäßen Verblendungsanordnung bei allen Verblendungssystemen mit einem ausziehbaren Verblendungskörper einsetzbar und stellt daher eine eigenständige Erfindung dar.

In einer bevorzugten Ausführung der Erfindung ist an mindestens einem Längsende der Griffleiste ein Kippgelenk ausgebildet ist, das auf der oberen Führungsschiene oder auf der unteren Führungsschiene geführt ist. Das Kippgelenk umfasst hierbei eine erste Querbohrung, die sich von der in der Griffleisten-Querstellung von der Kassette abgewandten Griffleisten-Vorderseite zu der gegenüberliegenden Griffleisten-Rückseite erstreckt, und umfasst eine zweite Querbohrung, die sich senkrecht zu der ersten Querbohrung von der in der Grifflelsten-Parallelstellung von der Kassette abgewandten ersten lateralen Griffleisten-Seite zu der gegenüberliegenden zweiten lateralen Griffleisten-Seite erstreckt. Die beiden Querbohrungen kreuzen sich - typischerweise in der Mitte der Griffleiste - und sind über zwei diagonal gegenüberliegende Eckaussparung derart miteinander verbunden, dass die Führungsschiene zwischen der ersten Querbohrung und der zweiten Querbohrung verkippbar ist. In der Griffleisten-Querstellung erstreckt sich die Führungsschiene im Wesentlichen durch die erste Querbohrung und in der Griffleisten-Parallelstellung erstreckt sich die Führungsschiene im Wesentlichen durch die zweite Querbohrung. Die diagonal gegenüberliegenden Eckaussparungen ermöglichen hierbei ein Kippen/Drehen der Griffleiste auf der Führungsschiene, ohne dass die Griffleiste hierbei die Führung durch die Führungsschiene verliert. Das erfindungsmäße Kippgelenk schafft eine zuverlässige und unverlierbare Führung der Griffleiste auf der Führungsschiene, wobei die Griffleiste beliebig zwischen der Querstellung und der Parallelstellung verkippbar ist.

Vorzugsweise nimmt die Griffleiste in der vollständig eingeschobenen Einschubstellung, in der der Verblendungskörper vollständig zusammengefaltet innerhalb der Kassette angeordnet ist, die Griffleisten-Querstellung ein und verdeckt eine in Auszugsrichtung des Verblendungskörpers weisende Verblendungskörper-Vorderseite im Wesentlichen vollständig. Der relativ empfindliche Verblendungskörper ist somit in der Einschubstellung durch die Griffleiste zuverlässig geschützt, sowohl vor mechanischen Einwirkungen als auch vor Verschmutzungen. Ferner ist der Verblendungskörper durch die Griffleiste "versteckt", sodass der Verblendungskörper in der Einschubstellung den optischen Eindruck des Innenraums nicht beeinträchtigt.

In einer bevorzugten Ausführung der Erfindung nimmt die Griffleiste in der ausgezogenen Verblendungsstellung, in der der Verblendungskörper vor der Frontscheibe aufgespannt ist, die Griffleisten-Parallelstellung ein. Ferner ist an der ersten lateralen Seite der Griffleiste, die in der Gebrauchsstellung von der Kassette wegweisend und quer zur Bewegungsrichtung des Verblendungskörpers ausgerichtet ist, eine Magnetleiste angeordnet. Die Magnetleiste ermöglicht eine zuverlässige magnetische Arretierung der Griffleiste an einem korrespondierenden ferromagnetischen Körper oder an einer korrespondierenden zweiten Magnetleiste und somit eine zuverlässige Arretierung des Verblendungskörpers in der Verblendungsstellung. Vorzugsweise ist die Griffleiste in der vollständig eingeschobenen Einschubstellung in der Griffleisten-Querstellung angeordnet, sodass die erste laterale Griffleisten-Seite mit der Magnetleiste innerhalb der Kassette angeordnet ist und somit nicht von außen sichtbar ist.

Ein Ausführungsbeispiel einer erfindungsgemäßen Verblendungsanordnung zur Verblendung einer Fahrzeugfrontscheibe wird nachfolgend anhand der beigefügten Figuren beschrieben, wobei
Figur 1 eine in einem KFZ montierte erfindungsgemäße Verblendungsanordnung mit zwei Verblendungssystemen in einer Nichtgebrauchsstellung zeigt,
Figur 2 ein erstes Verblendungssystem der Verblendungsanordnung aus Figur 1 in einer Gebrauchsstellung zeigt, wobei eine Kassette des Verblendungssystems herabgeschwenkt und eine untere Führungsschiene des Verblendungssystems ausgeklappt ist,
Figur 3 das Verblendungssystem aus Figur 2 in einer Verblendungsstellung zeigt, wobei ein Verblendungskörper des Verblendungssystems vor der Frontscheibe aufgespannt ist, und
Figur 4 ein Kippgelenk einer Griffleiste der Verblendungsanordnung aus Figur 1 zeigt.

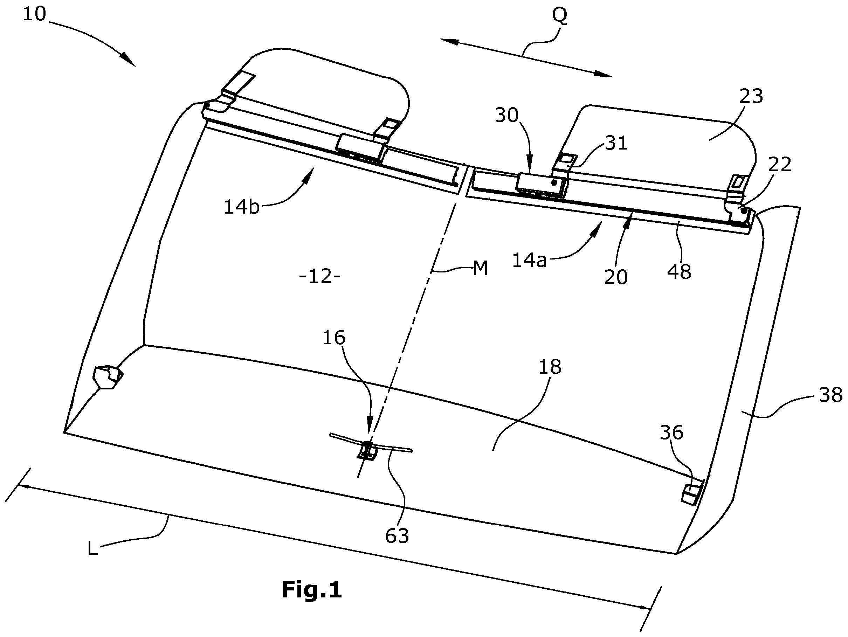

Die Figur 1 zeigt eine Verblendungsanordnung 10 zur Verblendung einer Fahrzeugfrontscheibe 12 im montierten Zustand. Im vorliegenden Ausführungsbeispiel umfasst die Verblendungsanordnung 10 zwei Verblendungssystemen 14a,14b sowie eine Führungsschienen-Arretierungsvorrichtung 16. Die beiden Verblendungssystemen 14a,14b sind spiegelsymmetrisch zueinander ausgebildet und spiegelsymmetrisch bezogen auf eine vertikale Fahrzeugfrontscheiben-Mittellinie M angeordnet. Die Führungsschienen-Arretierungsvorrichtung 16 ist bezogen auf eine Fahrzeugquerrichtung Q mittig - also an der Querposition der Fahrzeugfrontscheiben-Mittellinie M -an einer Unterseite der Fahrzeugfrontscheibe 12 positioniert und feststehend auf einem Fahrzeugarmaturenbrett 18 montiert.

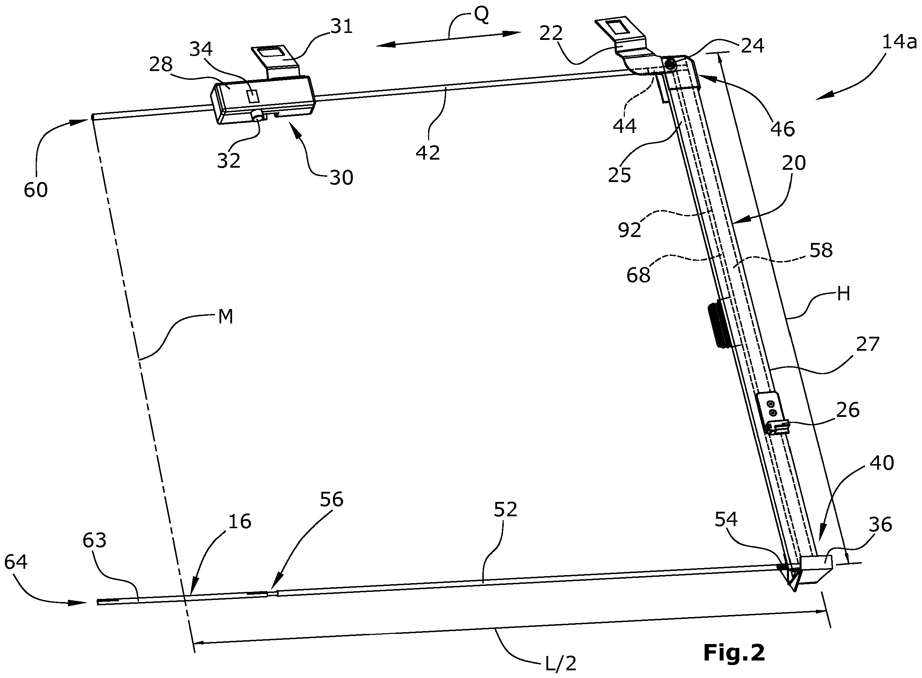

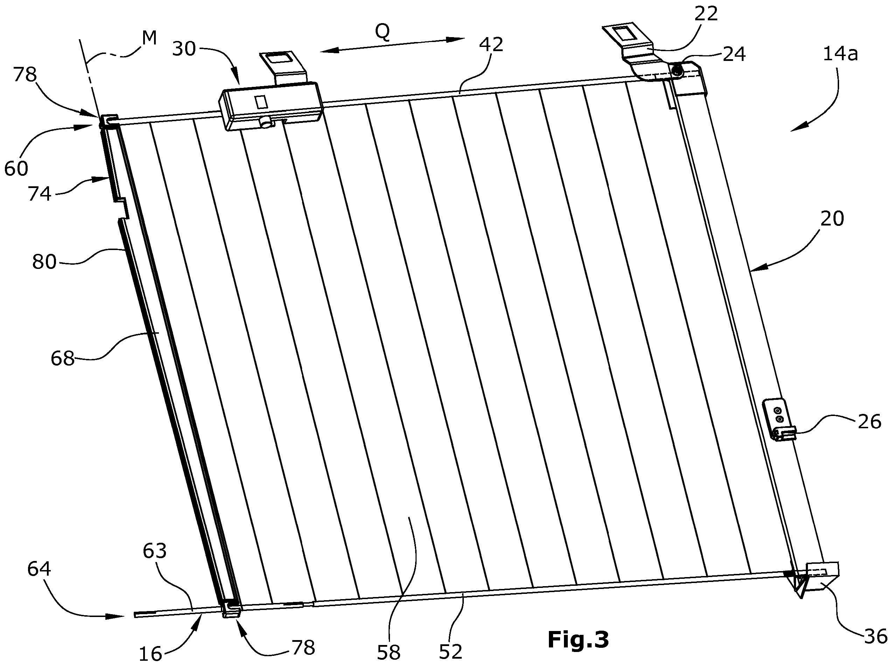

Der Aufbau der beiden Verblendungssysteme 14a,14b ist nachfolgend allgemeingültig für beide Verblendungssysteme 14a,14b mit Bezugszeichen ohne Index a,b beschrieben, und ist in den Figuren 2 und 3 beispielhaft anhand des ersten Verblendungssystems 14a dargestellt. Es ist zu beachten, dass die Komponenten der beiden Verblendungssystemen jeweils bezogen auf die Fahrzeugfrontscheiben-Mittellinie M spiegelsymmetrisch zueinander ausgebildet sind.

Jedes Verblendungssystem 14 umfasst eine Kassette 20, die über ein Kassettenhalteelement 22 an der Fahrzeugkarosserie befestigt, beispielsweise an einer Befestigung einer Sonnenblende 23. Die Kassette 20 ist hierbei über ein Kassetten-Schwenkgelenk 24 mit dem Kassettenhalteelement 22 verbunden, sodass die Kassette 20 innerhalb einer Kassetten-Schwenkebene zwischen einer horizontalen Nichtgebrauchsstellung, in der sich die Kassette - wie in Figur 1 dargestellt - im Wesentlichen in der Fahrzeugquerrichtung Q erstreckt, und einer herabgeschwenkten Gebrauchsstellung, in der sich die Kassette 20 - wie in den Figuren 2 und 3 dargestellt - im Wesentlichen senkrecht zu der Fahrzeugquerrichtung Q erstreckt, verschwenkbar ist. Das Kassetten-Schwenkgelenk 24 ist hierbei exzentrisch auf einer in der Gebrauchsstellung von einer Fahrzeug-A-Säule 38 abgewandten inneren Kassettenhälfte 25 angeordnet, sodass die Kassette 20 in der Nichtgebrauchsstellung beabstandet von der Fahrzeug-A-Säule 38 positioniert ist und in der Gebrauchsstellung im Wesentlichen entlang der gesamten Kassettenlänge an der Fahrzeug-A-Säule 38 anliegt.

Auf einer der Fahrzeugfrontscheibe 12 zugewandten Rückseite 27 der Kassette 20 ist ein Arretierungsvorsprung 26 angeordnet, der zusammen mit einer Arretierungsaufnahme 28, die oberhalb der Fahrzeugfrontscheibe 12 montiert ist, eine Kassetten-Arretierungsanordnung 30 bildet, durch die die Kassette 20 in der Nichtgebrauchsstellung zuverlässig arretierbar ist. Der Arretierungsvorsprung 26 greift hierbei in der Nichtgebrauchsstellung in die Arretierungsaufnahme 28 ein, wobei der Arretierungsvorsprung 26 in der Arretierungsaufnahme 28 durch einen nicht dargestellten Verriegelungsmechanismus zuverlässig verriegelt ist. Die Arretierungsaufnahme 28 ist im vorliegenden Ausführungsbeispiel über ein Arretierungsaufnahme-Halteelement 31 an der Fahrzeugkarosserie befestigt, beispielsweise an einer Befestigung der Sonnenblende 23. An einer dem Fahrzeugarmaturenbrett 18 zugewandten Unterseite der Arretierungsaufnahme 28 ist ein manuell betätigbares Entriegelungselement 32 angeordnet, durch dessen Betätigung der Verriegelungsmechanismus und somit die Arretierung der Kassette 20 lösbar ist. Im vorliegenden Ausführungsbeispiel ist das Entriegelungselement 32 als nach oben betätigbarer Druckschalter ausgebildet, der - wie in Figur 1 dargestellt - in der Nichtgebrauchsstellung hinter der Schwenkebene der Kassette 20 - also näherliegend zu der Fahrzeugfrontscheibe 12 als die Kassette 20 - angeordnet ist.

Im vorliegenden Ausführungsbeispiel weist die Kassetten-Arretierungsanordnung 30 ferner einen Arretierungssensor 34 auf, durch den der Verriegelungszustand des Verriegelungsmechanismus und somit der Arretierungszustand der Kassette 20 elektronisch erfassbar ist. Hierbei ist der Arretierungssensor 34 als Magnetschalter ausgebildet, der im verriegelten Zustand - also bei arretierter Kassette 20 - durch das Magnetfeld eines Sensormagneten ausgelöst wird. Typischerweise ist der Sensormagnet an einem bewegbaren Riegel des Verriegelungsmechanismus oder an dem Arretierungsvorsprung 26 angeordnet.

Jedes Verblendungssystem 14 umfasst ferner eine Kassetten-Aufnahme 36, die in unmittelbarer Nähe zu einer Fahrzeug-A-Säule 38 auf dem Fahrzeugarmaturenbrett 18 montiert ist, und die - wie in den Figuren 2 und 3 dargestellt - in der Gebrauchsstellung ein unteres Ende 40 der Kassette 20 aufnimmt.

Jedes Verblendungssystem 14 umfasst ferner eine horizontale obere Führungsschiene 42, die feststehend oberhalb der Fahrzeugfrontscheibe 12 montiert ist, beispielweise kann die obere Führungsschiene 42 an dem Kassettenhalteelement 22 und/oder dem Arretierungsaufnahme-Halteelement 31 befestigt sein. Die obere Führungsschiene 42 ist über ein oberes Führungsschienen-Gelenk 44, das im vorliegenden Ausführungsbeispiels als Schraubenfeder-Gelenk ausgebildet ist, mit einem oberen Ende 46 der Kassette 20 verbunden. Die obere Führungsschiene 42 erstreckt sich horizontal - im Wesentlichen parallel zu der Fahrzeugfrontscheibe 12 - in der Fahrzeugquerrichtung Q von der Kassette 20 bis zur Fahrzeugfrontscheiben-Mittellinie M oder zumindest bis in unmittelbare Nähe der Fahrzeugfrontscheiben-Mittellinie M. Es ist jedoch auch vorstellbar, dass die beiden Verblendungssysteme eine gemeinsame obere Führungsschiene aufweisen, die sich von der Kassette des ersten Verblendungssystems bis zu der Kassette des zweiten Verblendungssystems erstreckt und an beiden Querenden jeweils über ein oberes Führungsschienen-Gelenk mit der jeweiligen Kassette verbunden ist. Im vorliegenden Ausführungsbeispiel ist die obere Führungsschiene 42 als Metallrohr ausgebildet, beispielsweise als Stahlrohr.

Jedes Verblendungssystem 14 umfasst ferner eine Kassettenblende 48, die oberhalb der Fahrzeugfrontscheibe 12 montiert ist, beispielsweise kann die Kassettenblende 48 an dem Kassettenhalteelement 22 und/oder dem Arretierungsaufnahme-Halteelement 31 befestigt sein. Die Kassettenblende 48 verdeckt bezogen auf eine Fahrzeuglängsrichtung die obere Führungsschiene 42 und in der Nichtgebrauchsstellung auch die Kassette 20 auf einer von der Fahrzeugfrontscheibe 12 abgewandten Vorderseite. Im vorliegenden Ausführungsbeispiel ragt in der Nichtgebrauchsstellung eine Unterkante der Kassettenblende 48 - wie in Figur 1 dargestellt - nach unten über die Unterseite der Kassette 20 hinaus, sodass die obere Führungsschiene 42 und in der Nichtgebrauchsstellung auch die Kassette 20 durch die Kassettenblende 48 bezogen auf eine Fahrerposition im Wesentlichen vollständig verdeckt sind.

Jedes Verblendungssystem 14 umfasst ferner eine untere Führungsschiene 52, die über ein unteres Führungsschienen-Gelenk 54, das im vorliegenden Ausführungsbeispiels als Schraubenfeder-Gelenk ausgebildet ist, mit dem unteren Ende 40 der Kassette 20 verbunden ist. Im vorliegenden Ausführungsbeispiel ist die untere Führungsschiene 52 als Metallrohr ausgebildet, beispielsweise als Stahlrohr. Über das untere Führungsschienen-Gelenk 54 ist die untere Führungsschiene 52 bezogen auf die Kassette 20 zwischen einer Nichtgebrauchsstellung, in der die untere Führungsschiene 52 parallel zu der Kassette 20 angeordnet ist, und einer Gebrauchsstellung, in der die untere Führungsschiene 52 im Wesentlichen senkrecht zu der Kassette 20 angeordnet ist, verschwenkbar. Im vorliegenden Ausführungsbeispiel ist die untere Führungsschiene 52 in der Nichtgebrauchsstellung an die Kassette 20 angeklappt und zuverlässig an der Kassette 20 arretiert. Beispielsweise kann die Kassette 20 eine Führungsschienen-Aufnahme aufweisen, in der die untere Führungsschiene 52 in der Nichtgebrauchsstellung über eine Schnappverbindung gehalten wird. In der ausgeklappten Gebrauchsstellung ist die untere Führungsschiene 52 im Wesentlichen parallel zu der oberen Führungsschiene 42 angeordnet und mit einem von der Kassette 20 abgewandten freien Ende 56 zuverlässig an der Führungsschienen-Arretierungsvorrichtung 16 befestig. Im vorliegenden Ausführungsbeispiel ist die Führungsschienen-Arretierungsvorrichtung 16 derart ausgebildet, dass die untere Führungsschiene 52 beider Verblendungssysteme 14a,14b in der Gebrauchsstellung zuverlässig an der Führungsschienen-Arretierungsvorrichtung 16 befestigbar sind.

Jedes Verblendungssystem 14 umfasst ferner einen aufspannbaren Verblendungskörper 58, der im vorliegenden Ausführungsbeispiel als zusammenfaltbares Plissee ausgebildet ist. Der Verblendungskörper 58 ist in der Gebrauchsstellung der Verblendungsanordnung 10 - also wie in den Figuren 2 und 3 dargestellt bei heruntergeklappter Kassette 20 und ausgeklappter unterer Führungsschiene 52 - in horizontaler Richtung - also in der Fahrzeugquerrichtung Q - aus der Kassette 20 heraus und in die Kassette 20 hinein bewegbar. Hierbei ist der Verblendungskörper 58 in einer Einschubstellung vollständig zusammengefaltet und innerhalb der Kassette 20 angeordnet, und ist der Verblendungskörper 58 in einer Verblendungsstellung aus der Kassette 20 ausgezogen und vor der Fahrzeugfrontscheibe 12 aufgespannt. Die oberen Führungsschienen 42 der beiden Verblendungssysteme 14a,14b bilden hierbei eine obere Verblendungskörperführung 60 zur Führung einer Verblendungskörper-Oberseite der beiden Verblendungskörper 58 in horizontaler Richtung, und die beiden unteren Führungsschienen 52 bilden zusammen mit einem Führungselement 63 der Führungsschienen-Arretierungsvorrichtung 16 eine untere Verblendungskörperführung 64 zur Führung einer Verblendungskörper-Unterseite der beiden Verblendungskörper 58 in horizontaler Richtung. Die obere Verblendungskörperführung 60 und die untere Verblendungskörperführung 64 erstrecken sich jeweils im Wesentlichen entlang der gesamten Breite der Fahrzeugfrontscheibe 12 in der Querrichtung Q und weisen jeweils eine horizontale Führungslänge L auf, die mehr als doppelt so groß ist wie die Höhe H der senkrecht zu den beiden Verblendungskörperführungen 60,64 angeordneten Kassette 20. Im vorliegenden Ausführungsbeispiel weist der Verblendungskörper 58 an seiner Oberseite und an seiner Unterseite jeweils eine Vielzahl von Führungslöchern auf, durch die sich die obere Führungsschiene 42 bzw. die untere Führungsschiene 52 erstreckt.

An einem innenliegenden bewegbaren Ende des Verblendungskörpers 58 ist eine im Wesentlichen plattenförmige Griffleiste 68 befestigt, über die der Verblendungskörper 58 auf einfache Weise aus der Kassette 20 heraus und in die Kassette 20 hinein bewegbar ist. "Plattenförmig" bedeutet in diesem Zusammenhang, dass eine Vorderseite 70 und eine Rückseite 72 der Griffleiste 68 eine signifikant größere Fläche aufweisen als laterale Seiten 74,76 der Griffleiste 68.

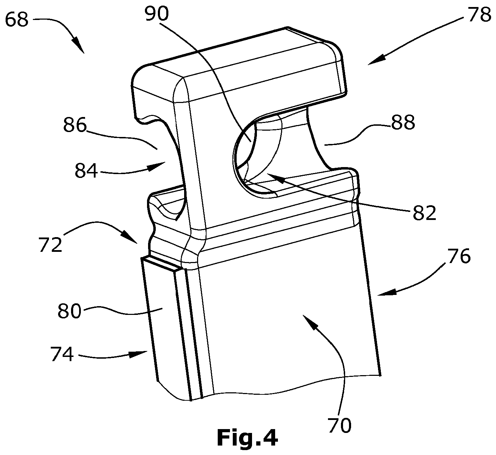

Im vorliegenden Ausführungsbeispiel weist die Griffleiste 68 an beiden Längsenden jeweils ein Kippgelenk 78 auf, wobei das Kippgelenk 78 am oberen Längsende der Griffleiste 68 und das Kippgelenk 78 am unteren Längsende der Griffleiste 68 Im Wesentlichen spiegelsymmetrisch zueinander ausgebildet sind. Ein erfindungsgemäßes Kippgelenk 78 ist beispielhaft in Figur 4 dargestellt.

Die Griffleiste 68 ist über die beiden Kippgelenke 78 auf den beiden Führungsschiene 42,52 geführt, wobei die Griffleiste 68 über die beiden Kippgelenke 78 bezogen auf die beiden Führungsschienen 42,52 zwischen einer Griffleisten-Querstellung und einer Griffleisten-Parallelstellung verkippbar. In der Griffleisten-Querstellung sind die Vorderseite 70 und die Rückseite 72 der Griffleiste 68 senkrecht zu den beiden Führungsschienen 42,52 ausgerichtet, sodass die Griffleiste 68 quer zu der Bewegungsrichtung angeordnet ist. In der Griffleisten-Parallelstellung sind die Vorderseite 70 und die Rückseite 72 der Griffleiste 68 parallel zu den beiden Führungsschienen 42,52 ausgerichtet, sodass die Griffleiste 68 parallel zu der Bewegungsrichtung angeordnet ist. In der Griffleisten-Querstellung weist die Griffleiste 68 somit senkrecht zu der Bewegungsrichtung eine größere Querschnittsfläche auf als in der Griffleisten-Parallelstellung. In der vollständig eingeschobenen Einschubstellung nimmt die Griffleiste 68 die Griffleisten-Querstellung ein, und in der ausgezogenen Verblendungsstellung nimmt die Griffleiste 68 die Griffleisten-Parallelstellung ein. Im vorliegenden Ausführungsbeispiel ist auf der in der Griffleisten-Parallelstellung von der Kassette 20 abgewandten ersten lateralen Griffleisten-Seite 74 eine Magnetleiste 80 befestigt.

Das Kippgelenk 78 umfasst eine erste Querbohrung 82, die sich von der in der Griffleisten-Querstellung von der Kassette 20 abgewandten Griffleisten-Vorderseite 70 zu der gegenüberliegenden Griffleisten-Rückseite 72 erstreckt, und umfasst eine zweite Querbohrung 84, die sich von der in der Griffleisten-Parallelstellung von der Kassette 20 abgewandten ersten lateralen Griffleisten-Seite 74 zu der gegenüberliegenden zweiten lateralen Griffleisten-Seite 76 erstreckt. Die beiden Querbohrung 82,84 kreuzen sich in der Mitte des Kippgelenks 78. Das erfindungsgemäße Kippgelenk 78 weist zwei diagonal gegenüberliegende Eckaussparungen 86,88 auf, über die die beiden Querbohrungen 82,84 miteinander verbunden sind. Die erste Eckaussparung 86 erstreckt sich hierbei von der ersten lateralen Griffleisten-Seite 74 zu der Griffleisten-Rückseite 72, und die zweite Eckaussparung 88 erstreckt sich von der zweiten lateralen Griffleisten-Seite 76 zu der Griffleisten-Vorderseite 70. Die beiden Querbohrungen 82,84 und die beiden Eckaussparungen 86,88 schaffen eine Kippkammer 90, durch die sich die obere Führungsschiene 42 bzw. die untere Führungsschiene 52 hindurch erstreckt. Hierbei erstreckt sich die obere Führungsschiene 42 bzw. die untere Führungsschiene 52 in der Griffleisten-Querstellung im Wesentlichen durch die erste Querbohrung 82 und in der Griffleisten-Parallelstellung im Wesentlichen durch die zweite Querbohrung 84. Die beiden Eckaussparungen 86,88 ermöglichen ein Verkippen der oberen Führungsschiene 42 bzw. der unterer Führungsschiene 52 in der Kippkammer 90 und ermöglichen somit ein Verkippen der Griffleiste 68 auf den Führungsschienen 42,52.

Wie in Figur 2 dargestellt ist der Verblendungskörper 58 in der Einschubstellung vollständig zusammengefaltet und somit kompakt innerhalb der Kassette 20 verstaut. In der Einschubstellung nimmt die Griffleiste 68 die Griffleisten-Querstellung ein und liegt an einer in Auszugsrichtung weisenden Vorderseite 92 des Verblendungskörpers 58 an und bedeckt diese im Wesentlichen vollständig. Bei Bedarf kann der Verblendungskörper 58 - wie in Figur 3 dargestellt - über die Griffleiste 68 horizontal aus der Kassette 20 herausgezogen und vor der Fahrzeugfrontscheibe 12 aufgespannt werden. In der aufgespannten Verblendungsstellung nehmen die Griffleisten 68 der beiden Verblendungssysteme 14a,14b jeweils die Griffleisten-Parallelstellung ein, sodass sich die Magnetleisten 80 der beiden Griffleisten 68 gegenüberstehen. Die Magnetleisten 80 sind hierbei derart ausgebildet, dass sie sich magnetisch anziehen, um die Verblendungskörper 58 in der Verblendungsstellung zu arretieren.

### Bezugszeichenliste

- 10: Verblendungsanordnung
- 12: Fahrzeugfrontscheibe
- 14: Verblendungssysteme
- 16: Führungsschienen-Arretierungsvorrichtung
- 18: Fahrzeugarmaturenbrett
- 20: Kassette
- 22: Kassettenhalteelement
- 23: Sonnenblende
- 24: Kassetten-Schwenkgelenk
- 25: innere Kassettenhälfte
- 26: Arretierungsvorsprung
- 27: Kassetten-Rückseite
- 28: Arretierungsaufnahme
- 30: Kassetten-Arretierungsanordnung
- 31: Arretierungsaufnahme-Halteelement
- 32: Entriegelungselement
- 34: Arretierungssensor
- 36: Kassetten-Aufnahme
- 38: Fahrzeug-A-Säule
- 40: unteres Kassetten-Ende
- 42: obere Führungsschiene
- 44: oberes Führungsschienen-Gelenk
- 46: oberes Kassetten-Ende
- 48: Kassettenblende
- 52: untere Führungsschiene
- 54: unteres Führungsschienen-Gelenk
- 56: freies Führungsschienen-Ende
- 58: Verblendungskörper
- 60: obere Verblendungskörperführung
- 63: Führungselement
- 64: untere Verblendungskörperführung
- 68: Griffleiste
- 70: Griffleisten-Vorderseite
- 72: Griffleisten-Rückseite
- 74: erste laterale Griffleisten-Seite
- 76: zweite laterale Griffleisten-Selte
- 78: Kippgelenk
- 80: Magnetleiste
- 82: erste Querbohrung
- 84: zweite Querbohrung
- 86: erste Eckaussparung
- 88: zweite Eckaussparung
- 90: Kippkammer
- 92: Verblendungskörper-Vorderseite

- H: Kassetten-Höhe
- L: Führungslänge
- M: Fahrzeugfrontscheiben-Mittellinie
- Q: horizontale Fahrzeugquerrichtung

## Patentansprüche

1. Verblendungsanordnung (10) zur Verblendung einer Fahrzeugfrontscheibe (12), die Verblendungsanordnung (10) umfassend:
mindestens ein Verblendungssystem (14a,14b) mit
- einer Kassette (20),
- einem aufspannbaren Verblendungskörper (58), der aus der Kassette (20) heraus und in die Kassette (20) hinein bewegbar ist, und **gekennzeichnet durch** eine horizontale obere Führungsschiene (42) zur Führung des Verblendungskörpers (58) in horizontaler Richtung, wobei die obere Führungsschiene (42) feststehend oberhalb der Fahrzeugfrontscheibe (12) montierbar ist,
wobei die Kassette (20) innerhalb einer Kassetten-Schwenkebene zwischen einer horizontalen Nichtgebrauchsstellung, in der die Kassette (20) parallel zu der oberen Führungsschiene (42) angeordnet ist, und einer herabgeschwenkten Gebrauchsstellung, in der die Kassette (20) senkrecht zu der oberen Führungsschiene (42) angeordnet ist, verschwenkbar ist, und
wobei die Kassette (20) in der Nichtgebrauchsstellung durch eine Kassetten-Arretierungsanordnung (30) arretierbar ist.

2. Verblendungsanordnung (10) nach Anspruch 1, wobei zwei Verblendungssysteme (14a,14b) vorgesehen sind, die spiegelsymmetrisch zueinander ausgebildet sind und die spiegelsymmetrisch bezogen auf eine vertikale Fahrzeugfrontscheiben-Mittellinie (M) montierbar sind.

3. Verblendungsanordnung (10) nach einem der vorhergehenden Ansprüche, wobei der Verblendungskörper (58) ein zusammenfaltbares Plissee ist.

4. Verblendungsanordnung (10) nach einem der vorhergehenden Ansprüche, wobei ein oberes Ende (46) der Kassette (20) über ein oberes Führungsschienen-Gelenk (44) mit einem Ende der oberen Führungsschiene (42) verbunden ist.

5. Verblendungsanordnung (10) nach einem der vorhergehenden Ansprüche, wobei eine untere Führungsschiene (52) zur Führung des Verblendungskörpers (58) in horizontaler Richtung vorgesehen ist, wobei ein Ende der unteren Führungsschiene (52) über ein unteres Führungsschienen-Gelenk (54) mit einem dem oberen Ende (46) der Kassette (20) gegenüberliegenden unteren Ende (40) der Kassette (20) verbunden ist, und wobei die untere Führungsschiene (52) in der Nichtgebrauchsstellung parallel zu der Kassette (20) angeordnet ist und in der Gebrauchsstellung senkrecht zu der Kassette (20) angeordnet ist.

6. Verblendungsanordnung (10) nach Anspruch 5, wobei die untere Führungsschiene (52) in der Nichtgebrauchsstellung an der Kassette (20) arretierbar ist.

7. Verblendungsanordnung (10) nach Anspruch 5 oder 6, wobei eine Führungsschienen-Arretierungsvorrichtung (16) vorgesehen ist, die an einem unteren Endbereich der Fahrzeugfrontscheibe (12) positionierbar und feststehend montierbar ist, und durch die die untere Führungsschiene (52) in der Gebrauchsstellung arretierbar ist, wobei in der Gebrauchsstellung vorzugsweise ein von der Kassette (20) abgewandtes freies Ende (56) der unteren Führungsschiene (52) an der Führungsschienen-Arretierungsvorrichtung (16) befestigt ist.

8. Verblendungsanordnung nach Anspruch 2 und 7, wobei durch die Führungsschienen-Arretierungsvorrichtung (16) die untere Führungsschiene (52) beider Verblendungssysteme (14a,14b) arretierbar ist.

9. Verblendungsanordnung (10) nach Anspruch 8, wobei in der Gebrauchsstellung die Führungsschienen-Arretierungsvorrichtung (16) zusammen mit der unteren Führungsschiene (52) der beiden Verblendungssysteme (14a,14b) eine untere Verblendungskörperführung (64) zur Führung des Verblendungskörpers (58) in horizontaler Richtung bildet, und wobei in der Gebrauchsstellung die horizontale Führungslänge (L) der unteren Verblendungskörperführung (64) mehr als doppelt so groß ist wie die Höhe (H) der senkrecht zu der unteren Verblendungskörperführung (64) angeordneten Kassette (20).

10. Verblendungsanordnung (10) nach einem der vorhergehenden Ansprüche, wobei das obere Führungsschienen-Gelenk (44) und/oder das untere Führungsschienen-Gelenk (54) durch ein elastisch biegsames Federelement gebildet ist.

11. Verblendungsanordnung (10) nach einem der vorhergehenden Ansprüche, wobei die Kassetten-Arretierungsanordnung (30) einen Arretierungssensor (34) aufweist, durch den ein Arretierungszustand der Kassette (20) elektronisch erfassbar ist.

12. Verblendungsanordnung (10) nach Anspruch 11, wobei der Arretierungssensor (34) durch einen Magnetschalter gebildet ist.

13. Verblendungsanordnung (10) nach einem der vorhergehenden Ansprüche, wobei die Kassetten-Arretierungsanordnung (30) einen Arretierungsvorsprung (26) aufweist, der auf einer im montierten Zustand der Fahrzeugfrontscheibe (12) zugewandten Rückseite der Kassette (20) angeordnet ist, und eine Arretierungsaufnahme (28) aufweist, die oberhalb der Fahrzeugfrontscheibe (12) montierbar ist und in die der Arretierungsvorsprung (26) in der Nichtgebrauchsstellung der Kassette (20) eingreift.

14. Verblendungsanordnung (10) nach einem der vorhergehenden Ansprüche, wobei die Kassetten-Arretierungsanordnung (30) ein manuell betätigbares Entriegelungselement (32) aufweist, durch dessen Betätigung die Arretierung der Kassette (20) in der Nichtgebrauchsstellung lösbar ist, und wobei das Entriegelungselement (32) auf einer im montierten Zustand der Fahrzeugfrontscheibe (12) zugewandten Seite der Kassetten-Schwenkebene angeordnet ist.

15. Verblendungsanordnung (10) nach einem der vorhergehenden Ansprüche, wobei eine Kassetten-Aufnahme (36) vorgesehen ist, die an einem Fahrzeugarmaturenbrett (18) und/oder an einer Fahrzeug-A-Säule (38) montierbar ist, und die nur in der Gebrauchsstellung das untere Ende (40) der Kassette (20) aufnimmt.

16. Verblendungsanordnung (10) nach einem der vorhergehenden Ansprüche, wobei eine Kassettenblende (48) vorgesehen ist, die oberhalb der Fahrzeugfrontscheibe (12) montierbar ist, und die die Kassette (20) in der Nichtgebrauchsstellung mindestens teilweise auf einer von der Fahrzeugfrontscheibe (12) abgewandten Vorderseite verdeckt.

17. Verblendungsanordnung (10) nach einem der vorhergehenden Ansprüche, wobei ein Kassetten-Schwenkgelenk (24) exzentrisch auf einer im montierten Zustand in der Gebrauchsstellung von einer Fahrzeug-A-Säule (38) abgewandten inneren Hälfte (25) der Kassette angeordnet ist.

18. Verblendungsanordnung (10) nach einem der vorhergehenden Ansprüche, wobei eine im Wesentlichen plattenförmige Griffleiste (68) vorgesehen ist, über die der Verblendungskörper (58) aus der Kassette (20) heraus und in die Kassette (20) hinein bewegbar ist, und wobei die Griffleiste (68) zwischen einer Querstellung, in der die Griffleiste (68) quer zu der Bewegungsrichtung des Verblendungskörpers (58) ausgerichtet ist, und einer Parallelstellung, in der die Griffleiste (68) parallel zu der Bewegungsrichtung des Verblendungskörpers (58) ausgerichtet ist, verkippbar ist.

19. Verblendungsanordnung (10) nach dem Anspruch 18, wobei an mindestens einem Längsende der Griffleiste (68) ein Kippgelenk (78) ausgebildet ist, das auf der oberen Führungsschiene (42) oder auf der unteren Führungsschiene (52) geführt ist, wobei das Kippgelenk (78) aufweist:
- eine erste Querbohrung (82), die sich von einer in der Griffleisten-Querstellung von der Kassette (20) abgewandten Griffleisten-Vorderseite (70) zu einer gegenüberliegenden Griffleisten-Rückseite (72) erstreckt,
- eine zweite Querbohrung (84), die sich senkrecht zu der ersten Querbohrung (82) von einer in der Griffleisten-Parallelstellung von der Kassette (20) abgewandten ersten lateralen Griffleisten-Seite (74) zu einer gegenüberliegenden zweiten lateralen Griffleisten-Seite (76) erstreckt,
wobei die beiden Querbohrungen (82,84) sich kreuzen und über zwei diagonal gegenüberliegende Eckaussparungen (86,88) miteinander verbunden sind, derart, dass die Führungsschiene (42,52) zwischen der ersten Querbohrung (82) und der zweiten Querbohrung (84) verkippbar ist.

20. Verblendungsanordnung (10) nach Anspruch 18 oder 19, wobei die Griffleiste (68) in einer vollständig eingeschobenen Einschubstellung die Griffleisten-Querstellung einnimmt und eine in Auszugsrichtung des Verblendungskörpers (58) weisende Verblendungskörper-Vorderseite (92) im Wesentlichen vollständig verdeckt.

21. Verblendungsanordnung (10) nach einem der Ansprüche 18 bis 20, wobei die Griffleiste (68) in einer vollständig ausgezogenen Verblendungsstellung die Griffleisten-Parallelstellung einnimmt, und wobei an der ersten lateralen Griffleisten-Seite (74) eine Magnetleiste (80) angeordnet ist.

## Claims

1. Cover arrangement (10) for covering a vehicle front window (12), the cover arrangement (10) comprising:
at least one cover system (14a, 14b) with
- a cassette (20)
- an expandable cover body (58) which can be moved out of and into the cassette (20), and **characterized by**
a horizontal upper guide rail (42) for guiding the cover body (58) in horizontal direction, wherein the upper guide rail (42) can be stationarily mounted above the vehicle front window (12),
wherein the cassette (20) can be pivoted within a cassette pivoting plane between a horizontal non-use position, in which the cassette (20) is arranged parallel to the upper guide rail (42), and a pivoted-down use position, in which the cassette (20) is arranged perpendicular to the upper guide rail (42), and
wherein the cassette (20) can be locked in the non-use position by a cassette locking arrangement (30).

2. Cover arrangement (10) according to claim 1, wherein two cover systems (14a,14b) are provided, which are designed mirror-symmetrically with respect to each other, and which can be mounted mirror-symmetrically with respect to a vertical vehicle front window centerline (M).

3. Cover arrangement (10) according to one of the preceding claims, wherein the cover body (58) is a foldable plisse.

4. Cover arrangement (10) according to one of the preceding claims, wherein an upper end (46) of the cassette (20) is connected to an end of the upper guide rail (42) via an upper guide rail joint (44).

5. Cover arrangement (10) according to one of the preceding claims, wherein a lower guide rail (52) for guiding the cover body (58) in horizontal direction is provided, wherein an end of the lower guide rail (52) is connected to a lower end (40) of the cassette (20), which lower end (40) is opposite to the upper end (46) of the cassette (20), via a lower guide rail joint (54), and wherein the lower guide rail (52) is arranged parallel to the cassette (20) in the non-use position and is arranged perpendicular to the cassette (20) in the use position.

6. Cover arrangement (10) according to claim 5, wherein the lower guide rail (52) can be locked at the cassette (20) in the non-use position.

7. Cover arrangement (10) according to claim 5 or 6, wherein a guide rail locking mechanism (16) is provided, which can be positioned and stationarily mounted at a lower end region of the vehicle front window (12), and by means of which the lower guide rail (52) can be locked in the use position, wherein, preferably, a free end (56) of the lower guide rail (52), which free end (56) is remote from the cassette (20), is fastened to the guide rail locking mechanism (16) in the use position.

8. Cover arrangement according to claim 2 and 7, wherein the lower guide rail (52) of both cover systems (14a,14b) can be locked by the guide rail locking mechanism (16).

9. Cover arrangement (10) according to claim 8, wherein, in the use position, the guide rail locking mechanism (16) defines, together with the lower guide rail (52) of the two cover systems (14a,14b), a lower cover body guiding (64) for guiding the cover body (58) in horizontal direction, and wherein, in the use position, the horizontal guiding length (L) of the lower cover body guiding (64) is more than twice the height (H) of the cassette (20) which is arranged perpendicular to the lower cover body guiding (64).

10. Cover arrangement (10) according to one of the preceding claims, wherein the upper guide rail joint (44) and/or the lower guide rail joint (54) is defined by an elastically bendable spring element.

11. Cover arrangement (10) according to one of the preceding claims, wherein the cassette locking arrangement (30) comprises a locking sensor (34) by which a locking state of the cassette (20) can be electronically detected.

12. Cover arrangement (10) according to claim 11, wherein the locking sensor (34) is defined by a magnetic switch.

13. Cover arrangement (10) according to one of the preceding claims, wherein the cassette locking arrangement (30) comprises a locking projection (26) which is arranged on a rear side of the cassette (20), which rear side faces the vehicle front window (12) in the mounted state, and comprises a locking receptacle (28) which can be mounted above the vehicle front window (12) and into which the locking projection (26) engages if the cassette (20) is in the non-use position.

14. Cover arrangement (10) according to one of the preceding claims, wherein the cassette locking arrangement (30) comprises a manually operable unlocking element (32), by the operation of which the locking of the cassette (20) in the non-use position can be released, and wherein the unlocking element (32) is arranged on a side of the cassette pivoting plane, which side faces the vehicle front window (12) in the mounted state.

15. Cover arrangement (10) according to one of the preceding claims, wherein a cassette receptacle (36) is provided, which can be mounted on a vehicle dashboard (18) and/or on a vehicle A-pillar (38), and which, only in the use position, receives the lower end (40) of the cassette (20).

16. Cover arrangement (10) according to one of the preceding claims, wherein a cassette cover (48) is provided, which can be mounted above the vehicle front window (12) and which covers the cassette (20) in the non-use position at least partially on a front side which faces away from the vehicle front window (12).

17. Cover arrangement (10) according to one of the preceding claims, wherein a cassette pivot joint (24) is arranged eccentrically at an inner half (25) of the cassette, which inner half (25) is, in the mounted state, remote from a vehicle A-pillar (38) in the use position.

18. Cover arrangement (10) according to one of the preceding claims, wherein a substantially plate-shaped handle bar (68) is provided, by means of which the cover body (58) can be moved out of the cassette (20) and into the cassette (20), and wherein the handle bar (68) can be tilted between a transverse position, in which the handle bar (68) is oriented transversely to the direction of movement of the cover body (58), and a parallel position in which the handle bar (68) is oriented parallel to the direction of movement of the cover body (58).

19. Cover arrangement (10) according to claim 18, wherein a tilting joint (78) is provided at at least one longitudinal end of the handle bar (68), which tilting joint (78) is guided on the upper guide rail (42) or on the lower guide rail (52), wherein the tilting joint (78) comprises:
- a first transverse bore (82) which extends from a handle bar front side (70), which faces away from the cassette (20) in the handle bar transverse position, to an opposite handle bar rear side (72),
- a second transverse bore (84) which extends perpendicularly to the first transverse bore (82) from a first lateral handle bar side (74), which faces away from the cassette (20) in the handle bar parallel position, to an opposite second lateral handle bar side (76),
wherein the two transverse bores (82, 84) intersect and are connected to each other via two diagonally opposite corner recesses (86, 88) in such a way that the guide rail (42, 52) can be tilted between the first transverse bore (82) and the second transverse bore (84).

20. Cover arrangement (10) according to claim 18 or 19, wherein the handle bar (68), in a completely pushed-in retracted position, is in the handle bar transverse position and substantially completely covers a cover body front side (92) which faces in a pull-out direction of the cover body (58).

21. Cover arrangement (10) according to one of claims 18 to 20, wherein the handle bar (68), in a completely pulled-out covering position, is in the handle bar parallel position, and wherein a magnetic bar (80) is arranged at the first lateral handle bar side (74).

## Revendications

1. Arrangement de revêtement (10) pour revêtir une vitre avant de véhicule (12), l'arrangement de revêtement (10) comprenant :
au moins un système de revêtement (14a, 14b) avec
- une cassette (20)
- un corps de couverture extensible (58) qui peut être déplacé hors de la cassette (20) et dans celle-ci, et **caractérisé par**
un rail de guidage supérieur horizontal (42) pour guider le corps de couverture (58) dans la direction horizontale, dans lequel le rail de guidage supérieur (42) peut être monté de manière stationnaire au-dessus de la fenêtre avant du véhicule (12),
dans lequel la cassette (20) peut être pivotée à l'intérieur d'un plan de pivotement de cassette entre une position horizontale de non-utilisation, dans laquelle la cassette (20) est agencée parallèlement au rail de guidage supérieur (42), et une position d'utilisation pivotée vers le bas, dans laquelle la cassette (20) est agencée perpendiculairement au rail de guidage supérieur (42), et
dans laquelle la cassette (20) peut être bloquée dans la position de non-utilisation par un arrangement de fermeture de cassette (30).

2. Arrangement de revêtement (10) selon la revendication 1, dans lequel deux systèmes de revêtement (14a, 14b) sont prévus, qui sont réalisés de façon symétrique l'un par rapport à l'autre, et qui peuvent être montés de façon symétrique par rapport à un axe vertical de la vitre avant du véhicule (M).

3. Arrangement de revêtement (10) selon l'une des revendications précédentes, dans lequel le corps de revêtement (58) est un plissé pliable.

4. Arrangement de revêtement (10) selon l'une des revendications précédentes, dans lequel une extrémité supérieure (46) de la cassette (20) est connectée à une extrémité du rail de guidage supérieur (42) via une articulation de rail de guidage supérieur (44).

5. Arrangement de revêtement (10) selon l'une des revendications précédentes, dans lequel un rail de guidage inférieur (52) pour guider le corps de couverture (58) dans la direction horizontale est prévu, dans lequel une extrémité du rail de guidage inférieur (52) est connectée à une extrémité inférieure (40) de la cassette (20), laquelle extrémité inférieure (40) est opposée à l'extrémité supérieure (46) de la cassette (20), via un joint de rail de guidage inférieur (54), et dans lequel le rail de guidage inférieur (52) est agencé parallèlement à la cassette (20) dans la position de non-utilisation et est agencé perpendiculairement à la cassette (20) dans la position d'utilisation.

6. Arrangement de revêtement (10) selon la revendication 5, dans lequel le rail de guidage inférieur (52) peut être bloqué au niveau de la cassette (20) dans la position de non-utilisation.

7. Arrangement de revêtement (10) selon la revendication 5 ou 6, dans lequel un mécanisme de blocage de rail de guidage (16) est prévu, qui peut être positionné et monté de manière fixe sur une zone d'extrémité inférieure de la vitre avant du véhicule (12), et au moyen duquel le rail de guidage inférieur (52) peut être bloqué dans la position d'utilisation, dans lequel, de préférence, une extrémité libre (56) du rail de guidage inférieur (52), laquelle extrémité libre (56) est éloignée de la cassette (20), est fixée au mécanisme de blocage de rail de guidage (16) dans la position d'utilisation.

8. Arrangement de revêtement selon les revendications 2 et 7, dans lequel le rail de guidage inférieur (52) des deux systèmes de revêtement (14a, 14b) peut être bloqué par le mécanisme de fermeture du rail de guidage (16).

9. Arrangement de revêtement (10) selon la revendication 8, dans lequel, dans la position d'utilisation, le mécanisme de blocage de rail de guidage (16) définit, conjointement avec le rail de guidage inférieur (52) des deux systèmes de revêtement (14a, 14b), un guidage inférieur de corps de revêtement (64) pour guider le corps de revêtement (58) dans la direction horizontale, et dans lequel, dans la position d'utilisation, la longueur de guidage horizontal (L) du guidage inférieur de corps de revêtement (64) est plus de deux fois la hauteur (H) de la cassette (20) qui est disposée perpendiculairement au guidage inférieur de corps de revêtement (64).

10. Arrangement de revêtement (10) selon l'une des revendications précédentes, dans lequel le joint de rail de guidage supérieur (44) et/ou le joint de rail de guidage inférieur (54) est défini par un élément de ressort élastiquement pliable.

11. Arrangement de revêtement (10) selon l'une des revendications précédentes, dans lequel l'arrangement de fermeture de cassette (30) comprend un senseur de fermeture (34) par lequel un état de fermeture de la cassette (20) peut être détecté électroniquement.

12. Arrangement de revêtement (10) selon la revendication 11, dans lequel le senseur de fermeture (34) est représenté par un commutateur magnétique.

13. Arrangement de revêtement (10) selon l'une des revendications précédentes, dans lequel l'arrangement de blocage de cassette (30) comprend une projection de fermeture (26) qui est disposée sur un côté arrière de la cassette (20), lequel côté arrière fait face à la vitre avant du véhicule (12) dans l'état monté, et comprend un réceptacle de fermeture (28) qui peut être monté au-dessus de la vitre avant du véhicule (12) et dans lequel la projection de fermeture (26) s'engage lorsque la cassette (20) est dans la position de non-utilisation.

14. Arrangement de revêtement (10) selon l'une des revendications précédentes, dans lequel l'arrangement de blocage de cassette (30) comprend un élément de déblocage (32) actionnable manuellement, par l'action duquel le blocage de la cassette (20) dans la position de non-utilisation peut être libéré, et dans lequel l'élément de déblocage (32) est disposé sur un côté du plan de pivotement de la cassette, lequel côté est tourné vers la vitre avant du véhicule (12) à l'état monté.

15. Arrangement de revêtement (10) selon l'une des revendications précédentes, dans lequel un réceptacle de cassette (36) est prévu, qui peut être monté sur un panneau de bord de véhicule (18) et/ou sur un pilier A de véhicule (38), et qui, uniquement dans la position d'utilisation, reçoit l'extrémité inférieure (40) de la cassette (20).

16. Arrangement de revêtement (10) selon l'une des revendications précédentes, dans lequel il est prévu un couvercle de cassette (48) qui peut être monté au-dessus de la vitre avant (12) du véhicule et qui recouvre la cassette (20) en position de non-utilisation au moins partiellement sur un côté frontal opposé à la vitre avant (12) du véhicule.

17. Arrangement de revêtement (10) selon l'une des revendications précédentes, dans lequel une articulation de pivotement de cassette (24) est disposée de manière excentrée sur une moitié intérieure (25) de la cassette, laquelle moitié intérieure (25) est, à l'état monté, éloignée d'un pilier A de véhicule (38) en position d'utilisation.

18. Arrangement de revêtement (10) selon l'une des revendications précédentes, dans lequel il est prévu un guidon (68) sensiblement en forme de plaque, au moyen duquel le corps de revêtement (58) peut être déplacé hors de la cassette (20) et dans la cassette (20), et dans lequel le guidon (68) peut être pivoté entre une position transversale, dans laquelle le guidon (68) est orienté transversalement à la direction de déplacement du corps de revêtement (58), et une position parallèle, dans laquelle le guidon (68) est orienté parallèlement à la direction de déplacement du corps de revêtement (58).

19. Arrangement de revêtement (10) selon la revendication 18, dans lequel un joint pivotant (78) est prévu à au moins une extrémité longitudinale du guidon (68), lequel joint pivotant (78) est guidé sur le rail de guidage supérieur (42) ou sur le rail de guidage inférieur (52), dans lequel le joint pivotant (78) comprend:
- un premier alésage transversal (82) qui s'étend d'un côté avant du guidon (70), qui est orienté à l'opposé de la cassette (20) dans la position transversale du guidon, à un côté arrière opposé du guidon (72),
- un deuxième alésage transversal (84) qui s'étend perpendiculairement au premier alésage transversal (82) à partir d'un premier côté latéral du guidon (74), qui fait face à l'opposé de la cassette (20) dans la position parallèle du guidon, vers un deuxième côté latéral opposé du guidon (76),
dans lequel les deux alésages transversaux (82, 84) se croisent et sont connectés l'un à l'autre par l'intermédiaire de deux évidements d'angle (86, 88) diagonalement opposés, de telle sorte que le rail de guidage (42, 52) peut être pivoté entre le premier alésage transversal (82) et le second alésage transversal (84).

20. Arrangement de revêtement (10) selon la revendication 18 ou 19, dans lequel le guidon (68), dans une position rétractée complètement poussée, se trouve dans la position transversale du guidon et recouvre sensiblement complètement une face avant (92) du corps de revêtement qui est orientée dans une direction d'extraction du corps de revêtement (58).

21. Arrangement de revêtement (10) selon l'une des revendications 18 à 20, dans lequel la barre de poignée (68), dans une position de recouvrement complètement tirée, se trouve dans la position parallèle à la barre de poignée, et dans lequel une barre magnétique (80) est disposée sur le premier côté latéral de la barre de poignée (74).
